# EUROPÄISCHE PATENTANMELDUNG

(11) **EP 2 562 462 A2**
(43) Veröffentlichungstag der Anmeldung: **27.02.2013**
(21) Anmeldenummer: 12192433.6
(22) Anmeldetag: 07.07.2009
(51) Int. Cl.: F16M 13/04, G02B 27/01, F16M 11/14, F16M 11/04

(54) **Haltevorrichtung für ein mobiles Multimedia-Endgerät**

(30) Priorität: 06.07.2009 US 223115 P
(62) Teilanmeldung aus: 09008836.0
(71) Anmelder: Headflat GmbH, 76316 Malsch (DE)
(72) Erfinder: Keune, Dirk, 76316 Malsch (DE)
(74) Vertreter: Lemcke, Brommer & Partner

(57) **Zusammenfassung**

Vorgeschlagen wird eine Haltevorrichtung (1) für ein mobiles Multimedia-Endgerät (2), wie Pocket-PC, Smartphone oder dergleichen, aufweisend:
- wenigstens einen Haltearm (4);
- an einem ersten Ende des Haltearms angeordnete Befestigungsmittel (5), die zum Befestigen des Haltearms an einer Kopfbedeckung (3), vorzugsweise einer handelsüblichen Schirmmütze oder einem handelsüblichen Stirnband mit Sonnenschufz-Schild (3a), ausgebildet sind, so dass sich der Haltearm von der Kopfbedeckung aus in Blickrichtung eines Benutzers nach vorne erstreckt;
- an dem anderen, zweiten Ende des Haltearms angeordnete Aufnahme- und Haltemittel (6) für das Multimedia-Endgerät;
bei der die Aufnahme- und Haltemittel für das Multimedia-Endgerät derart relativ zu dem Haltearm angeordnet oder einstellbar sind, dass sich zumindest die graphische Anzeigeeinrichtung (2a) eines darin aufgenommenen Multimedia-Endgeräts nach Befestigung des Haltearms an der Kopfbedeckung im Wesentlichen mittig im Gesichtsfeld eines Benutzers befindet.

## Beschreibung

Die vorliegende Erfindung betrifft eine Haltevorrichtung für ein mobiles Multimedia-Endgerät, wie einen Pocket-PC, ein Smart-Phone oder dergleichen, beispielsweise das iPhone oder den iPod touch aus dem Hause der Firma Apple.

Derartige Multimedia-Endgeräte stellen ihrem Benutzer ein breites Spektrum von Audio- und Videoinhalten zur Verfügung und werden vielfach bereits als eine Art Ersatz-Fernsehen verwendet.

Insbesondere bei länger andauernder Verwendung ist hierbei jedoch als nachteilig anzusehen, dass der Benutzer das betreffende Multimedia-Endgerät dauerhaft in einer auf Dauer wenig komfortablen Position in seinem Gesichtsfeld halten muss, was zu einer unangenehmen Beanspruchung bzw. Ermüdung der Armmuskulatur führt. Außerdem führt die angesprochene Verwendung des mobilen Multimedia-Endgeräts dazu, dass damit der Benutzer gegebenenfalls längerfristig nur maximal eine Hand frei hat, um damit andere Tätigkeiten auszuüben.

Hier lässt sich Abhilfe schaffen, indem das mobile Multimedia-Endgerät in geeigneter Weise auf einen Gegenstand, wie ein Kissen oder dergleichen, abgelegt wird. Dies erfordert jedoch zum einen das Vorhandensein eines entsprechenden Gegenstandes, was gerade im mobilen Einsatz nicht zwangsläufig gegeben ist. Zudem bedingt eine derartige Lösung eine relativ statische Sitz- oder Liegeposition des Benutzers, was ebenfalls mittel- oder langfristig unerwünscht ist. Außerdem hat sich herausgestellt, dass das Ablegen oder Abstelten eines mobilen Multimedia-Endgeräts, insbesondere auf einem Kissen, die Qualität des hörbaren Audiosignals negativ beeinflussen kann, wenn beispielsweise der eingebaute Gerätelautsprecher ganz oder teilweise verdeckt wird.

Der Erfindung liegt die Aufgabe zugrunde, unter Vermeidung der vorstehend angesprochenen Nachteile eine Haltevorrichtung für ein mobiles Multimedia-Endgerät anzugeben, welche sich aufgrund ihrer einfachen und kostengünstigen Ausgestaltung für die Verwendung im Alltag eignet und welche es dem Benutzer ermöglicht, insbesondere die Videofunktionen seines mobilen Multimedia-Endgeräts ermüdungsfrei über einen längeren Zeitraum zu nutzen, ohne dabei in seinen manuellen Möglichkeiten und/oder beim Genuss der Audiofunktion des Geräts beeinträchtigt zu sein. Darüber hinaus soll die Mobilität des Multimedia-Endgerätes im Wesentlichen unbeeinträchtigt bleiben.

Die Erfindung löst diese Aufgabe mittels einer Haltevorrichtung für ein mobiles Multimedia-Endgerät mit den Merkmalen des beigefügten Patentanspruchs 1.

Vorteilhafte Weiterbildungen der Erfindung sind Gegenstand von Unteransprüchen, deren Wortlaut hiermit durch ausdrückliche Bezugnahme in die Beschreibung aufgenommen wird, um unnötige Textwiederholungen weitgehend zu vermeiden.

Erfindungsgemäß ist eine Haltevorrichtung für ein mobiles Multimedia-Endgerät, wie Pocket-PC, Smart-Phone oder dergleichen, folgendermaßen ausgebildet: Sie umfasst wenigstens einen Haltearm sowie an einem ersten Ende des Haltearms angeordnete Befestigungsmittel, die zum Befestigen des Haltearms an einer Kopfbedeckung, vorzugsweise einer handelsüblichen Schirmmütze oder einem handelsüblichen Stirnband mit Sonnenschutzschild, ausgebildet sind. Dabei erfolgt die Befestigung derart, dass sich der Haltearm von der Kopfbedeckung aus in Blickrichtung eines Benutzers, welcher die Kopfbedeckung trägt, nach vorne erstreckt. An dem anderen, zweiten Ende des Haltearms sind Aufnahme- und Haltemittel für das Multimedia-Endgerät angeordnet. Weiterhin sind die Aufnahme- und Haltemittel für das Multimedia-Endgerät derart relativ zu dem Haltearm an diesem angeordnet oder einstellbar, dass sich zumindest die graphische Anzeigeeinrichtung, das heißt das Display eines in den Aufnahme- und Haltemitteln aufgenommenen und darin gehaltenen Multimedia-Endgeräts nach Befestigung des Haltearms an der Kopfbedeckung im Wesentlichen mittig im Gesichtsfeld eines Benutzers befindet.

Nach einem Grundgedanken der vorliegenden Erfindung umfasst die vorgeschlagene Haltevorrichtung also wenigstens einen Haltearm, der an einer Kopfbedeckung zu befestigen ist. Die genannte Kopfbedeckung kann dabei entweder selbst Teil der erfindungsgemäßen Haltevorrichtung sein oder kann hiervon unabhängig als separater, handelsüblicher Gegenstand vorliegen, beispielsweise in Form einer Schirmmütze oder dergleichen.

Der Haltearm wird also mit seinem einen Ende an der Kopfbedeckung befestigt und trägt an seinem anderen Ende die bereits erwähnten Aufnahme- und Haltemittel für das Multimedia-Endgerät, mit welchen letzteres an dem Haltearm befestigt wird. Das Multimedia-Endgerät selbst ist nicht Teil der vorliegenden Erfindung. Grundsätzlich kommt jedes im Handel befindliche Multimedia-Endgerät für eine Verwendung mit der erfindungsgemäßen Haltevorrichtung in Frage.

Wie bereits ausgeführt, erstreckt sich der Haltearm der erfindungsgemäßen Haltevorrichtung nach seiner Befestigung an der Kopfbedeckung in Blickrichtung des Benutzers nach vorne, und die Aufnahme- und Haltemittel für das Multimedia-Endgerät sind derart an dem Vorderende des Haltearms angeordnet bzw. entsprechend einstellbar, dass sich anschließend das Display des Multimedia-Endgeräts mittig im Gesichtsfeld des Benutzers befindet, so dass dieser das genannte Display ohne Weiteres und mit entspannter Kopfhaltung ohne Verwendung seiner Hände betrachten kann.

In diesem Zusammenhang ist das Merkmal, wonach an dem einen Ende des Haltearms die genannten Befestigungsmittel angeordnet sind, so zu verstehen, dass die Befestigungsmittel entweder an dem Haltearm selbst vorgesehen sind, also gewissermaßen einen Teil des Haltearms bilden, oder dass die Befestigungsmittel anderweitig vorgesehen sind, z. B. an der Kopfbedeckung, und lediglich von außen auf den Haltearm einwirken, wobei sie allerdings ebenfalls an diesem angeordnet sind.

Insbesondere hinsichtlich der Ausgestaltung des wenigstens einen Haltearms sind im Rahmen der vorliegenden Erfindung vielfältige Möglichkeiten gegeben, auf die weiter unten auch mit Blick auf die beigefügte Zeichnung und die entsprechende Figurenbeschreibung noch genauer eingegangen wird.

Erfindugsgemäß kann einerseits vorgesehen sein, dass die Befestigungsmittel als Klemmmittel mit wenigstens zwei federelastisch gegeneinander wirkenden Klemmteilen ausgebildet sind, mit welchen der Haltearm im Klemmsitz an einem Schild, einem Schirm, einer Krempe oder dergleichen einer vorzugsweise handelsüblichen Kopfbedeckung befestigbar ist.

Im einfachsten Fall lässt sich die Haltevorrichtung somit beispielsweise auf den Mützenschirm einer herkömmlichen Schirmmütze aufschieben.

Alternative Varianten zum Befestigen der Haltevorrichtungen bzw. der Haltearme mit der Kopfbedeckung umfassen unter anderem Schraubverbindungen, Nietverbindungen, Klebeverbindungen, Klettverbindungen sowie Nahtverbindungen, vorzugsweise im Bereich des Mützenschirms einer herkömmlichen Schirmmütze.

Alternativ kann erfingdungsgemäß vorgesehen sein, dass die Befestigungsmittel wenigstens einen Durchbruch in dem Haltearm sowie durch den Durchbruch hindurchführbare Verbindungsmittel, vorzugsweise Schraubmittel, umfassen, die mit wenigstens einer komplementären Struktur, vorzugsweise einem entsprechenden Durchbruch, im Schirm-, Schild- oder Krempenbereich einer ansonsten vorzugsweise handelsüblichen Kopfbedeckung zusammenwirken, um den Haltearm an der Kopfbedeckung zu befestigen, wobei die Haltevorrichtung höchst vorzugsweise zusätzlich eine entsprechende ausgebildete Kopfbedeckung mit umfasst. Alternativ kann an der Kopfbedeckung eine geeignete Struktur zum Verbinden mit den Verbindungsmitteln vorgesehen sein, beispielsweise eine Gewindestruktur oder eine Raststruktur zum gerasteten Verbinden mit geeigneten Rastmitteln.

Alternativ können die Befestigungsmittel - wie bereits angedeutet - auch in Form einer Klettverbindung ausgeführt sein, wobei beispielsweise an dem Haltearm ein geeignete Hakenmaterial angeordnet, insbesondere aufgeklebt ist, während sich das entsprechende Flauschmaterial an der Kopfbedeckung befindet, insbesondere auf der Ober- und/oder Unterseite des Mützenschirms, Sonnenschilds oder dergleichen. Natürlich ist auch die umgekehrte Anbringung möglich.

Eine andere Alternative der erfindungsgemäßen Haltevorrichtung sieht vor, dass die Befestigungsmittel eine bezüglich der Erstreckung des Haltearms umgebogene, hakenförmige Struktur umfassen, welche zum Einhängen in eine geeignete Struktur, vorzugsweise ein Verstellband oder dergleichen, im Hinterkopfbereich einer Kopfbedeckung ausgebildet ist, um den Haltearm an der Kopfbedeckung zu befestigen, wobei der Haltearm zwischen den Befestigungsmitteln und seinem zweiten Ende zumindest einen zu der Form der Kopfbedeckung komplementär geformten Abschnitt aufweist. Auch hier kann die Haltevorrichtung höchst vorzugsweise zusätzlich eine entsprechende ausgebildete Kopfbedeckung mit umfassen, welche die genannten Einhängestrukturen besitzt.

Damit das Multimedia-Erlebnis angesichts der heutzutage üblichen Abmessungen typischer Multimedia-Endgeräte, wie des iPhones oder des iPod touch der Firma Apple, hinreichend genussvoll ablaufen kann, sieht eine erste Weiterbildung der erfindungsgemäßen Haltevorrichtung vor, dass der Haltearm, vorzugsweise bei Realisierung geeigneter Einstellmöglichkeiten, insbesondere einer Verlängerung oder Verkürzung, derart ausgebildet ist, dass sich die Aufnahme- und Haltemittel für das Multimedia-Entlgerät in einem Abstand zwischen 10 cm und 40 cm, vorzugsweise zwischen 15 cm und 30 cm, vom Auge des Benutzers befindet.

Unabhängig davon kann die Haltevorrichtung im Zuge einer anderen Weiterbildung zwei parallel angeordnete, im Wesentlichen identische Haltearme aufweisen, an deren zweiten Enden die Aufnahme- und Haltemittel für das Multimedia-Endgerät angeordnet sind, um die Stabilität der Anordnung zu verbessern.

Eine wieder andere Weiterbildung der erfindungsgemäßen Haltevorrichtung sieht vor, dass die Aufnahme- und Haltemittel für das Multimedia-Endgerät gelenkig an dem Haltearm befestigt sind, um weitreichende Einstellmöglichkeiten für die Orientierung der Anzeigeeinrichtung des Multimedia-Endgeräts zu ermöglichen. In diesem Zusammenhang kann beispielsweise die Verwendung eines Kugelgelenks oder eines Schwenkgelenks zwischen dem Haltearm und den genannten Aufnahme- und Haltemittel vorgesehen sein. Alternativ können Haltearm und Aufnahme-/Haltemittel einstückig ausgebildet sein.

Vorteilhafterweise sind die Aufnahme- und Haltemittel als eine Halteschale ausgebildet, in welche das Multimedia-Endgerät seitlich einschiebbar und/oder einklipsbar ist. Für verschiedene Typen von Multimedia-Endgeräten können jeweils eigene Aufnahme- und Haltemittel vorgesehen sein, welche entsprechend den Abmessungen des Multimedia-Endgeräts dimensioniert sind.

Alternativ kann jedoch auch vorgesehen sein, dass die Aufnahme- und Haltemittel für das Multimedia-Endgerät auf unterschiedlich dimensionierte Multimedia-Endgerät einstellbar sind.

Weiterhin können die Aufnahme- und Haltemittel für das Multimedia-Endgerät lösbar an dem Haltearm befestigt sein, wobei in diesem Zusammenhang insbesondere die Verwendung einer Schraubverbindung in Betracht zu ziehen ist. Jedoch umfasst die vorliegende Erfindung auch Ausgestaltungen, bei denen die genannten Aufnahme- und Haltemittel und der wenigstens eine Haltearm einstückig, stoffschlüssig oder in anderer Weise miteinander verbunden sind.

Auch der wenigstens eine Haltearm kann im Zuge einer anderen Ausgestaltung der vorliegenden Erfindung ein Gelenk aufweisen, so dass die Aufnahme- und Haltemittel für das Multimedia-Endgerät bei Bedarf aus dem Gesichtsfeld des Benutzers heraus bewegbar (schwenkbar) sind.

Eine andere Weiterbildung der erfindungsgemäßen Haltevorrichtung sieht vor, dass der Haltearm zumindest abschnittsweise flexibel ausgebildet ist, vorzugsweise biegsam-halbsteif nach Art eines Schwanenhalses oder dergleichen. Auch hierdurch lässt sich eine bedarfsgerechte Positionierung des Multimedia-Endgeräts erreichen.

Der wenigstens eine Haltearm muss nicht geradlinig ausgebildet sein, sondern kann im Zuge entsprechender Weiterbildungen der vorliegenden Erfindung im Bereich seines zweiten Endes wenigstens eine Abwinkelung oder Abbiegung aufweisen, um die Aufnahme- und Haltemittel für das Multimedia-Endgerät bereits in der gewünschten Weise im Gesichtsfeld des Benutzers zu positionieren. Dabei kann das Maß der Abwinkelung bzw. Abbiegung vorzugsweise zwischen 70° und 110° und höchst vorzugsweise etwa 90° betragen.

Zumindest der Haltearm der erfindungsgemäßen Haltevorrichtung kann bei entsprechender Weiterbildung zumindest abschnittsweise im Wesentlichen flach oder alternativ mit einem runden Querschnitt ausgebildet sein. Als Materialien insbesondere für den Haltearm der erfindungsgemäßen Haltevorrichtung kommen Kunststoff und/oder Metall in Frage.

Allen Ausgestaltungen der erfindungsgemäßen Haltevorrichtung ist gemein, dass sie weiterhin noch eine Lautsprechereinrichtung oder ein so genanntes Soundsystem aufweisen können, welches vorzugsweise nach Art eines Kopfhörers ausgebildet ist und welches zur Befestigung an dem Haltearm oder an der Kopfbedeckung vorgesehen ist, wobei die Lautsprechereinrichtung vorzugsweise mit dem mobilen Multimedia-Endgerät signaltechnisch zum Ausgeben von Audiosignalen des Multimedia-Endgeräts zusammenwirkt.

Im Zuge einer besonderen Weiterbildung der Haltevorrichtung kann der Haltearm zumindest teilweise durch eine verlängert ausgebildete Struktur der Kopfbedeckung, wie einen nach vorne verlängerten Mützenschirm oder dergleichen, gebildet sein.

Weitere Eigenschaften und Vorteile der vorliegenden Erfindung ergeben sich aus der nachfolgenden Beschreibung von Ausführungsbeispielen anhand der Zeichnung.
- Figuren 1 a bis 1 h: zeigen verschiedene Ansichten und Ausbildungen einer ersten Ausgestaltung der erfindungsgemäßen Haltevorrichtung;
- Figuren 2a bis 2h: zeigen verschiedene Ansichten und Ausbildungen einer zweiten Ausgestaltung der erfindungsgemäßen Haltevorrichtung;
- Figuren 3a bis 3h: zeigen verschiedene Ansichten und Ausbildungen einer dritten, nicht zur Erfindung gehörigen Ausgestaltung der Haltevorrichtung;
- Figuren 4a bis 4h: zeigen verschiedene Ansichten und Ausbildungen einer vierten, nicht zur Erfindung gehörigen Ausgestaltung der Haltevorrichtung;
- Figuren 5a bis 5e: zeigen verschiedene Ansichten und Ausbildungen einer fünften, nicht zur Erfindung gehörigen Ausgestaltung der Haltevorrichtung;
- Figuren 6a bis 6g: zeigen verschiedene Ansichten und Ausbildungen einer sechsten Ausgestaltung der erfindungsgemäßen Haltevorrichtung;
- Figuren 7a bis 7i: zeigen verschiedene Ansichten und Ausbildungen einer siebten Ausgestaltung der erfindungsgemäßen Haltevorrichtung; und
- Figuren 8a bis 8f: zeigen verschiedene Ansichten und Ausbildungen einer achten Ausgestaltung der erfindungsgemäßen Haltevorrichtung.

Wenn nachfolgend jeweils zusammenfassend von "Figur X" die Rede ist, so sind damit alle zugehörigen Teilfiguren "Figur Xy" mit umfasst, wobei y = a, b, c, ...

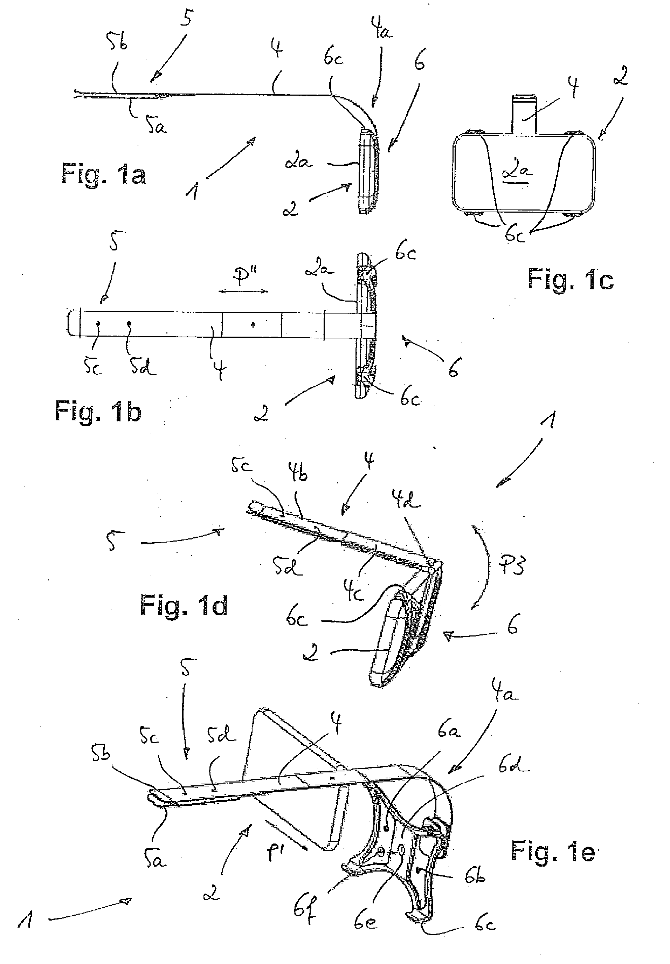

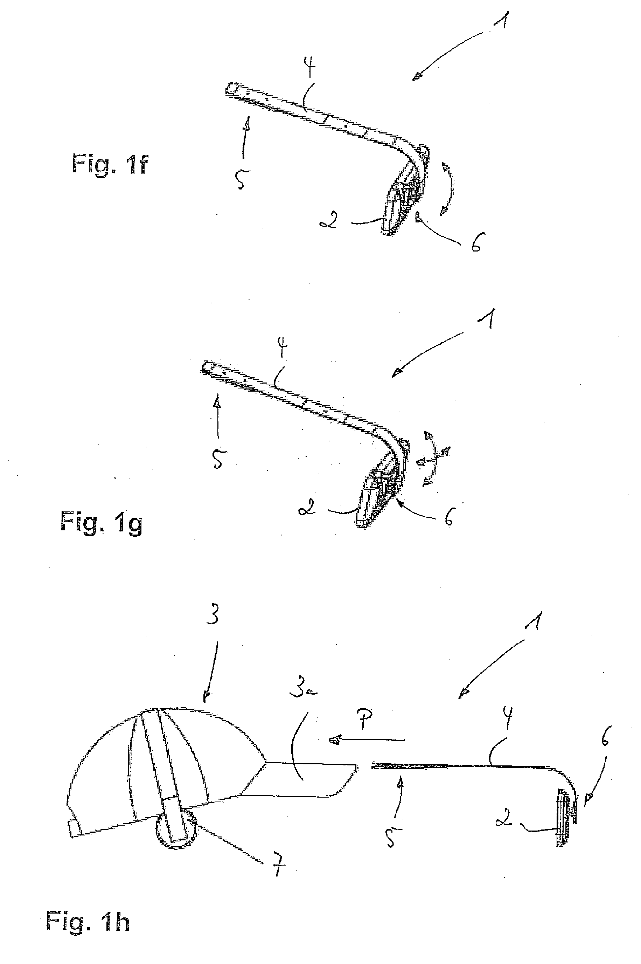

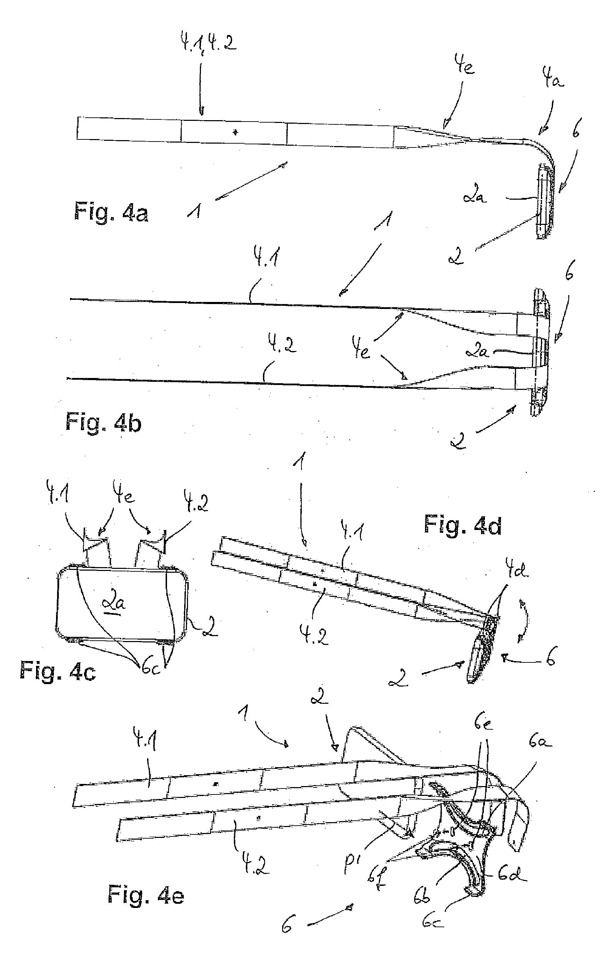

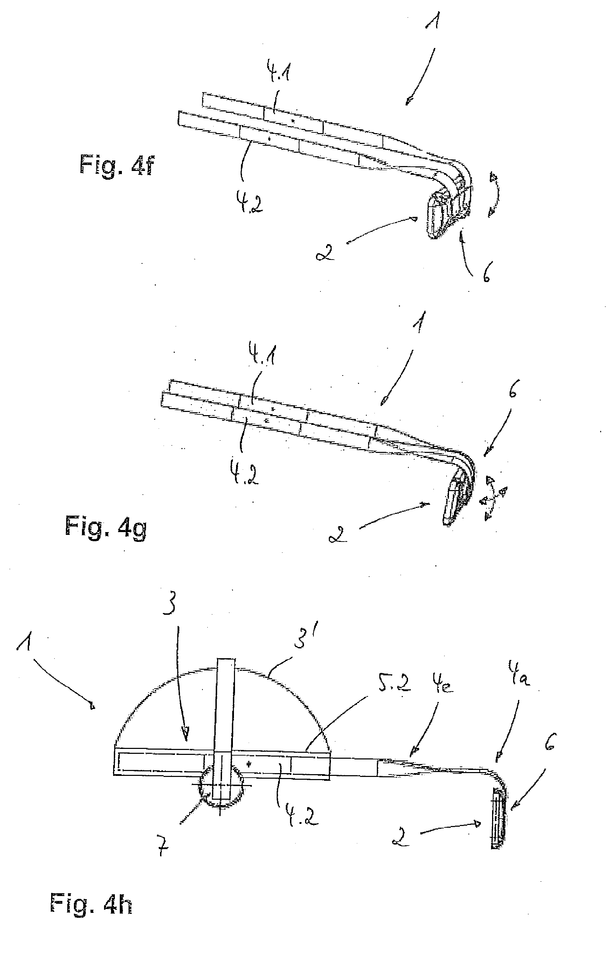

Die Haltevorrichtung ist in den Figuren 1 bis 8 insgesamt mit dem Bezugszeichen 1 bezeichnet. Sie dient zum Befestigen eines mobilen Multimedia-Endgeräts 2, wie eines Pocket-PC oder eines Smart-Phones, welches nicht Teil der eigentlichen Haltevorrichtung 1 ist, an einer Kopfbedeckung 3, welche vorzugsweise und ohne Beschränkung in Form einer im Wesentlichen handelsüblichen Schirmmütze (Figuren 1 bis 3 und 5 bis 8) oder nach Art eines Stirnbands (Figur 4) ausgebildet sein kann.

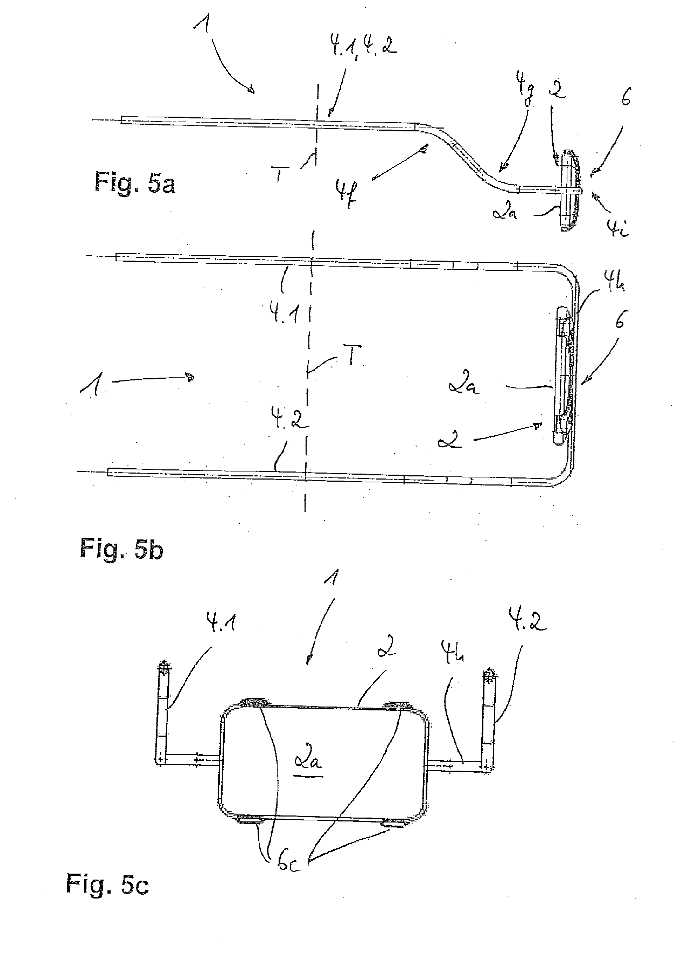

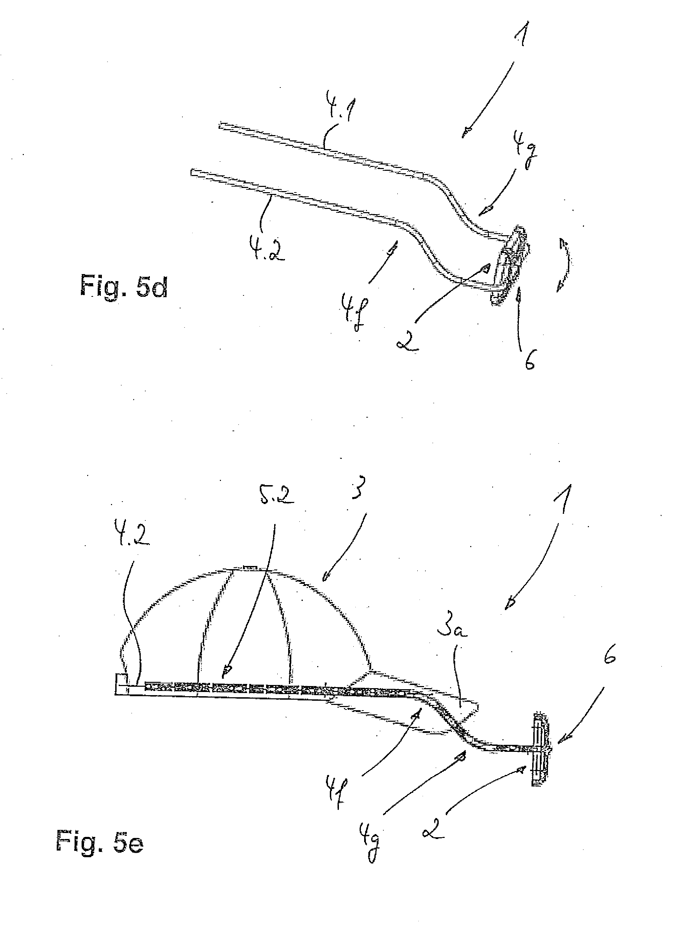

Die Kopfbedeckung 3 kann ihrerseits Bestandteil der erfindungsgemäßen Haltevorrichtung 1 sein, insbesondere wenn spezielle konstruktive Veränderungen an der Kopfbedeckung 3 erforderlich sind, wie beispielsweise im Falle der Ausgestaltungen gemäß Figur 4 und Figur 5.

Insbesondere eignet sich die erfindungsgemäße Haltevorrichtung 1 zur Verwendung mit dem iPod touch oder dem iPhone der Firma Apple, ist jedoch keinesfalls hierauf beschränkt.

Die Haltevorrichtung 1 umfasst gemäß beispielsweise Figur 1 zunächst wenigstens einen Haltearm 4, an dessen einem Ende Befestigungsmittel 5 angeordnet sind, die zum Befestigen des Haltearms 4 an der Kopfbedeckung 3 dienen. An dem anderen Ende des Haltearms 4 sind Aufnahme- und Haltemittel 6 für das Multimedia-Endgerät 2 vorgesehen.

Mittels der Befestigungsmittel 5 ist der Haltearm 4 derart an einer Kopfbedeckung 3 zu befestigen, dass sich der Haltearm 4 von der Kopfbedeckung 3 aus in Blickrichtung eines Benutzers, welcher die Kopfbedeckung 3 trägt, nach vorne erstreckt. Dabei sind die Aufnahme- und Haltemittel 6 für das Multimedia-Endgerät 2 derart relativ zu dem Haltearm 4 angeordnet und/oder einstellbar, dass sich zumindest die graphische Anzeigeeinrichtung, das heißt der Bildschirm oder das Display 2a des Multimedia-Endgeräts 2 nach Befestigung des Haltearms 4 an der Kopfbedeckung 3 im Wesentlichen mittig im Gesichtsfeld des Benutzers befindet.

Die "freie Länge" des Haltearms 4, das heißt der Abstand zwischen den Befestigungsmitteln 5 und den Aufnahme- und Haltemitteln 6 für das Multimedia-Endgerät 2 ist dabei vorzugsweise so bemessen, dass sich die Anzeigeeinrichtung 2a des Multimedia-Endgeräts 2 in einem Abstand zwischen 10 cm und 40 cm, vorzugsweise zwischen 15 cm und 30 cm, vom Auge des Benutzers befindet, wenn das Multimedia-Endgerät 2 in den Aufnahme- und Haltemitteln 6 aufgenommen und gehalten ist.

Diese Merkmale finden sich in funktional vergleichbarer Form bei allen Ausgestaltungen der erfindungsgemäßen Haltevorrichtung 1 gemäß den Figuren 1 bis 6. Nachfolgend wird nun auf die einzelnen Ausgestaltungen der erfindungsgemäßen Haltevorrichtungen der erfindungsgemäßen Haltevorrichtung anhand der einzelnen Figuren bzw. Teilfiguren genauer eingegangen.

Die Ausgestaltung gemäß Figur 1, umfassend Teilfiguren 1a bis 1 h, zeigt eine erste, besonders einfache Ausgestaltung der vorliegenden Erfindung.

Gemäß der Seitenansicht in Figur 1 a weist der einzelne, nach Art eines flachen Bandes ausgestaltete Haltearm 4 an seinem einen Ende Befestigungsmittel 5 auf, die als Klemmmittel mit wenigstens zwei federelastisch gegeneinander wirkenden Klemmteilen 5a und 5b ausgebildet sind. Mit den Klemmteilen 5a, 5b ist der Haltearm 4 gemäß der Darstellung in Figur 1h in Richtung des Pfeils P von vorne auf den Schirm 3a einer ansonsten handelsüblichen Schirmmütze 3 aufschiebbar, um die Haltevorrichtung 1 im Klemmsitz an der Schirmmütze 3 zu befestigen. Selbstverständlich ist die Erfindung in diesem Zusammenhang nicht auf eine Verwendung mit Schirmmützen beschränkt, sondern lässt sich prinzipiell an jedem Schild, Schirm oder einer Krempe einer ansonsten vorzugsweise handelsüblichen Kopfbedeckung 3 befestigen.

An seinem anderen Ende ist der Haltearm 4 mit einer Abbiegung 4a versehen, so dass er in diesem Bereich unter einem Winkel von etwa 90° bezüglich seiner Haupterstreckungsrichtung verläuft. An demjenigen Ende des Haltearms 4, welches den Befestigungsmitteln 5 gegenüberliegt, sind die bereits erwähnten Aufnahme- und Haltemittel 6 für das Multimedia-Endgerät 2 angeordnet. Diese sind nach Art einer das Multimedia-Endgerät 2 zumindest teilweise seitlich umgreifenden Halteschale ausgebildet, wie beispielsweise anhand der Figuren 1d und 1e gut erkennbar ist. Vorzugsweise ist das Multimedia-Endgerät 2 gemäß dem Pfeil P' in Figur 1e seitlich in die Aufnahme- und Haltemittel 6 einschiebbar, ohne dass die Erfindung jedoch auf eine derartige Ausgestaltung beschränkt wäre. Alternativ können die Aufnahme- und Haltemittel 6 auch nach Art einer Clipschale ausgebildet sein, in welche das Multimedia-Endgerät 2 einklipsbar ist. Weiterhin können die Aufnahme- und Haltemittel 6 auch beispielsweise in der Breite einstellbar ausgebildet sein, um ein quasi beliebiges eingesetztes Multimedia-Endgerät 2 durch anschließendes Einstellen der Aufnahme- und Haltemittel zu fixieren.

Vorliegend sind die Aufnahme- und Haltemittel 6 in etwa X-förmig mit innenliegenden Durchbrüchen 6a, 6b ausgebildet und umgreifen das eingeschobene Multimedia-Endgerät seitlich mittels vier leicht einwärts gekrümmten Haltevorsprüngen 6c, die vorteilhafter Weise gepolstert sind.

Ein im Zentrum der Aufnahme- und Haltemittel 6 angeordneter Steg 6d weist gemäß Figur 1e einen zentralen Durchbruch 6e in Form einer Bohrung auf, über welchen die Aufnahme- und Haltemittel 6 mittels eines Verbindungselements 6f, vorzugsweise in Form einer Schraube, an dem dafür vorgesehenen und entsprechend ausgebildeten Ende des Haltearms 4 festlegbar sind.

Der Haltearm 4 weist zu diesem Zweck an seinem mit den Aufnahme- und Haltemitteln 6 zusammenwirkenden Ende geeignete komplementäre Verbindungsmittel auf, welche in den Figuren aus Gründen der Übersichtlichkeit nicht explizit dargestellt sind, beispielsweise eine Bohrung mit Innengewinde.

Wie der Fachmann erkennt, ist die vorliegende Erfindung jedoch keinesfalls auf die in Figur 1e beispielhaft gezeigte Verbindung zwischen Haltearm 4 und den Aufnahme- und Haltemitteln 6 beschränkt. Alternativ kann die Verbindung in diesem Bereich beispielsweise durch Kleben oder in sonstiger Weise stoffschlüssig erfolgen. Weiterhin können die Aufnahme- und Haltemittel 6 auch einstückig mit dem Haltearm 4 ausgebildet sein. Auch ein Verbinden durch Klemmen, Einstecken, Verrasten oder mit Hilfe eines Klettbands kommt hier in Betracht.

Wie ein Blick insbesondere auf die Draufsicht in Figur 1b zeigt, kann der Haltearm 4 in seinem geraden Bereich (vgl. Figur 1 a) mehrteilig ausgebildet sein, so dass sich in Längsrichtung des Haltearms 4 eine Längenverstellbarkeit in Richtung des Doppelpfeils P" ergibt. Beispielsweise kann der zur Kopfbedeckung 3 hin angeordnete Teil des Haltearms 4 (links in Figur 1 b) in den restlichen Teil des Haltearms 4 (rechts in Figur 1 b) eingesteckt sein, so dass sich die genannte Verschiebbarkeit bzw. Einstellbarkeit in Richtung des Doppelpfeils P" ergibt. Eine derartige Ausgestaltung ist beispielsweise der Figur 1 d entnehmbar. Dort besteht der Haltearm 4 aus einem ersten Teil 4b, welches auch die Befestigungsmittel 5 aufweist, und einem zweiten Teil 4c, welche zwei parallel verlaufende Schenkel aufweist, zwischen denen der erste Teil 4b verschiebbar aufgenommen ist. Des weiteren ist gemäß Figur 1d die bereits genannte Abbiegung 4a des Haltearms 4 durch ein in Richtung des Doppelpfeils P3 verstellbares Gelenk 4d gebildet, so dass das Multimedia-Endgerät 2, welches in den Aufnahme- und Haltemitteln 6 aufgenommen ist, bei Bedarf aus dem Gesichtsfeld des Benutzers nach oben herausgeschwenkt werden kann (vgl. die Darstellung in Figur 1h).

Die persprektivischen Ansichten in den Figuren 1f und 1g zeigen Weiterbildungen der vorstehend beschriebenen Ausgestaltung, bei denen die Aufnahme- und Haltemittel 6 und damit das Multimedia-Endgerät 2 in Richtung der jeweiligen Doppelpfeile verschwenkbar an dem Haltearm 4 angeordnet sind. Vorzugsweise weisen die Aufnahme- und Haltemittel 6 zu diesem Zweck ein nicht näher dargestelltes Gelenk, insbesondere ein Scharnier- oder Kugelgelenk auf, so dass sich die genannte Verstellbarkeit bezüglich des Haltearms 4 ergibt.

Unter erneuter Bezugnahme auf Figur 1h kann die Haltevorrichtung 1 zusätzlich und optional noch ein Soundsystem 7 insbesondere in Form eines Kopfhörers aufweisen, welches mit dem Multimedia-Endgerät signaltechnisch zusammenwirkt, um Audiosignale des Multimedia-Endgeräts 2 für den Benutzer erfahrbar zu machen. Das Zusammenwirken kann drahtgebunden oder auch drahtlos erfolgen. Das Soundsystem 7 kann integraler Bestandteil der Kopfbedeckung 3 sein, welche zu diesem Zweck entsprechend konstruktiv ausgebildet ist. Alternativ kann das Soundsystem 7 auch als von der Kopfbedeckung 3 getrennter separater Bestandteil der Haltevorrichtung 1 vorliegen.

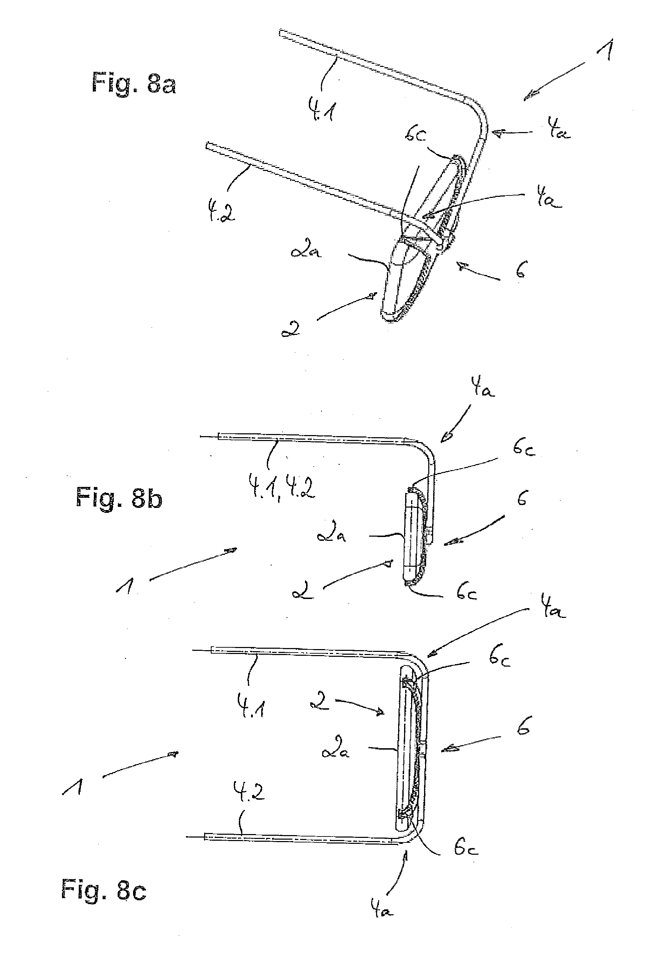

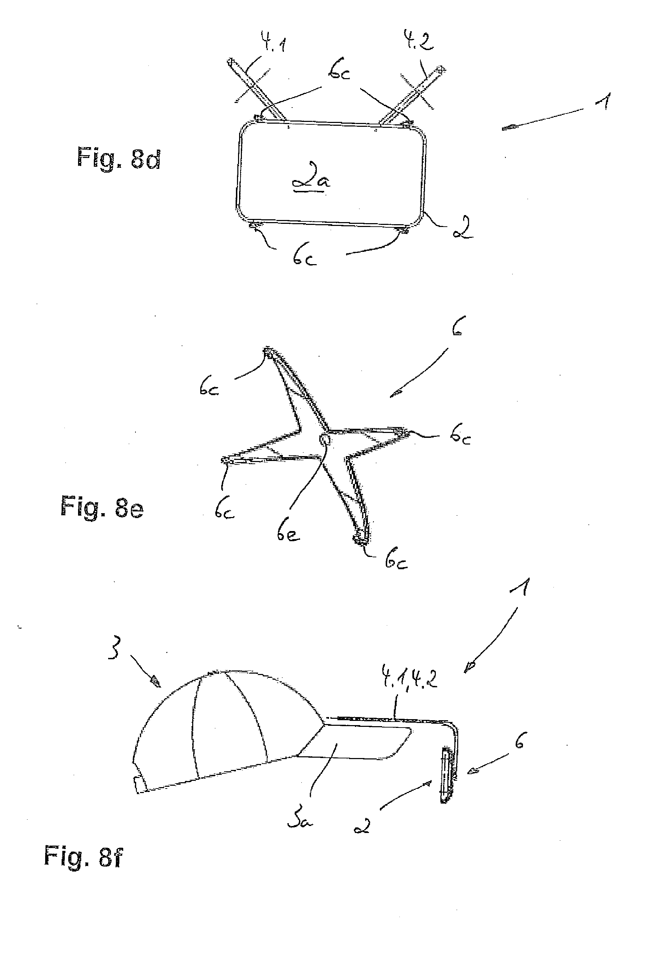

Vorteilhafterweise sind die wesentlichen Bestandteile der erfindungsgemäßen Haltevorrichtung 1 gemäß den Figuren 1a bis 1h soweit möglich und zweckmäßig in Kunststoff ausgebildet, ohne dass die vorliegende Erfindung jedoch hierauf beschränkt wäre. Für bestimmte Komponenten der Vorrichtung kommt alternativ auch eine Ausgestaltung in (Leicht-)Metall in Betracht. Insbesondere die Aufnahme- und Haltemittel 6 können im Zuge einer bevorzugten Ausgestaltung der vorliegenden Erfindung auch als Stanzteil in Metall, insbesondere Aluminium, ausgebildet sein (vgl. Figur 8).

Insbesondere Figur 1b zeigt optionale weitere Befestigungsmittel 5c, 5d in Form von Durchbrüchen (Löchern) in dem Haltearm 4 bzw. dem oberen Klemmteil 5b. Durch die Löcher 5c, 5d sind Verbindungsmittel, z. B. in Form von Schauben, in geeignete komplementäre Strukturen an der Kopfbedeckung 3 einführbar, z. B. in entsprechende Durchbrüche im Mützenschirm 3a (Figur 1h), um den Haltearm 4 an der Kopfbedeckung 3 zu fixieren. Das untere Klemmteil 5a kann dabei entfallen. Darüber hinaus können die vorstehend genannten Verbindungsmittel natürlich auch bei einer herkömmlichen Kopfbedeckung eingesetzt werden, um die Klemmkraft zu erhöhen.

Bei der Verwendung wird die Vorrichtung 1 mit den Befestigungsmitteln 5 in Richtung des Pfeils P einfach auf den Schirm, das Schild oder die Krempe der Kopfbedeckung 3 aufgeschoben, wie aus Figur 1h ersichtlich, und ist dort durch die Befestigungsmittel 5 gehalten. Ein in den Aufnahme- und Haltemitteln 6 enthaltenes Multimedia-Endgerät 2 befindet sich dann in einem angenehmen Abstand mittig im Gesichtsfeld des Benutzers, so dass dieser ohne Einsatz seiner Hände in entspannter Weise die Anzeigeeinrichtung 2a des Multimedia-Endgeräts 2 betrachten kann.

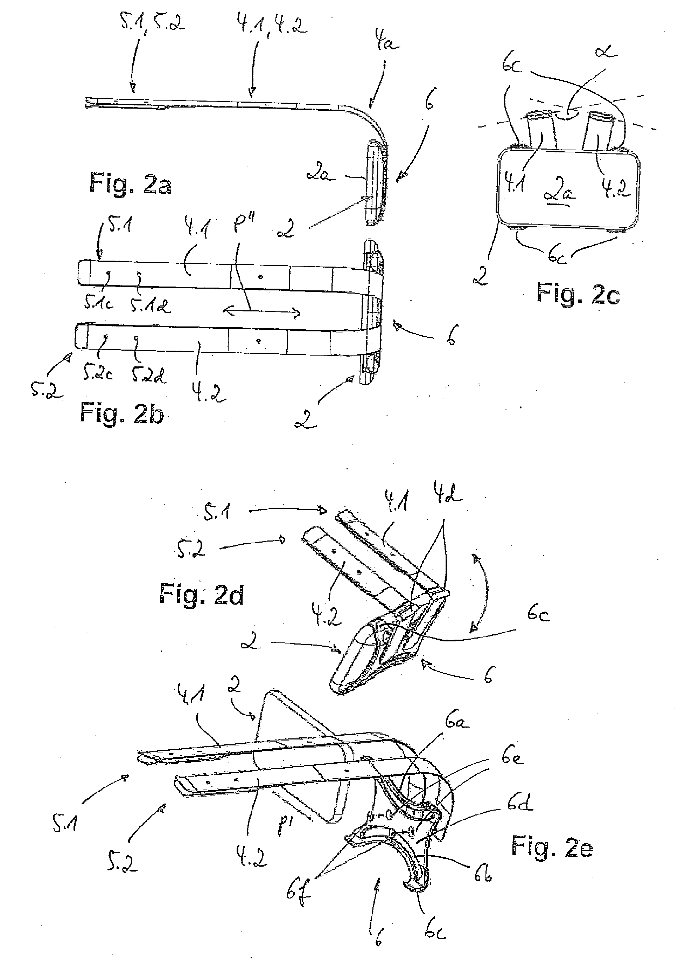

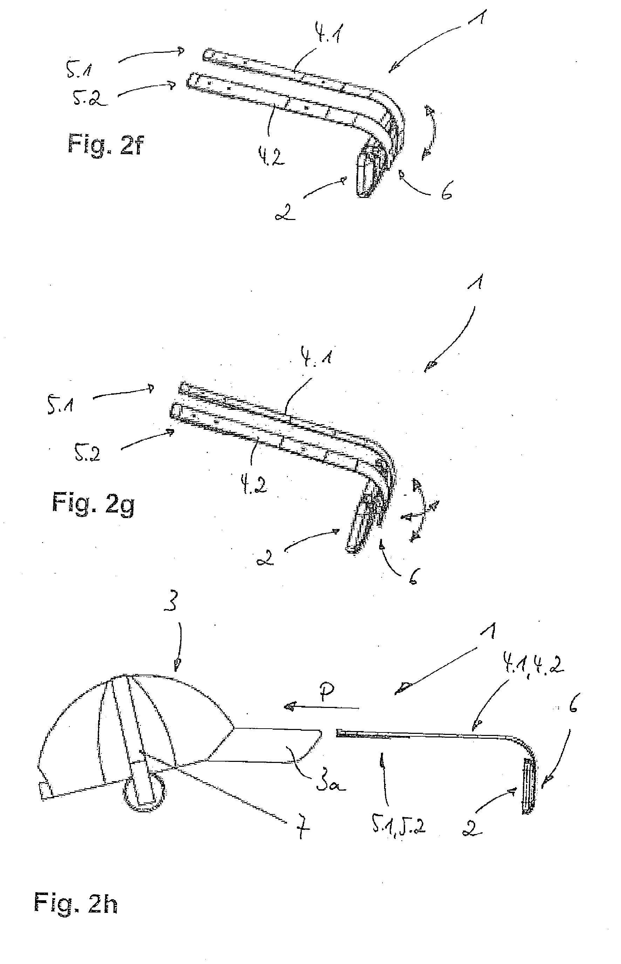

Die Figuren 2a bis 2h (kurz: Figur 2) zeigen bestimmte Weiterbildungen einer weiteren Ausgestaltung der erfindungsgemäßen Haltevorrichtung 1. Vorliegend wird nur auf die wesentlichen Abweichungen gegenüber der vorstehend beschriebenen Ausgestaltung gemäß den Figuren 1a bis 1h näher eingegangen.

Wie insbesondere der Draufsicht in Figur 2b zu entnehmen ist, weist die Haltevorrichtung 1 gemäß Figur 2 zwei parallele Haltearme 4.1 und 4.2 auf, die jedoch ansonsten genauso ausgebildet sind, wie der Haltearm 4 gemäß Figur 1. Zwecks Anpassung an die regelmäßig leicht gebogene Formgebung des Mützenschirms 3a verlaufen die beiden Haltearme 4.1, 4.2 gemäß beispielsweise Figur 2c nicht in einer Ebene sondern unter einem gewissen (stumpfen) Winkel α, siehe Figur 2c.

Wie beispielsweise aus Figur 2e ersichtlich ist, sind die beiden Haltearme 4.1, 4.2 gemeinsam mit den Aufnahme- und Haltemitteln 6 verbunden, welche zu diesem Zweck eine entsprechende Anzahl von Durchbrüchen 6e aufweisen.

Ansonsten entspricht der Aufbau und die Funktion der Haltevorrichtung 1 gemäß Figur 2 vollständig den obigen Ausführungen zu Figur 1, so dass darauf an dieser Stelle nicht weiter einzugehen ist.

Zum Verbinden mit der Kopfbedeckung 3 werden entsprechend beide Haltearme 4.1, 4.2 mit den jeweiligen Befestigungsmitteln 5.1, 5.2 auf den Mützenschirm 3a oder dergleichen der Kopfbedeckung 3 aufgeschoben (vgl. Figur 2h).

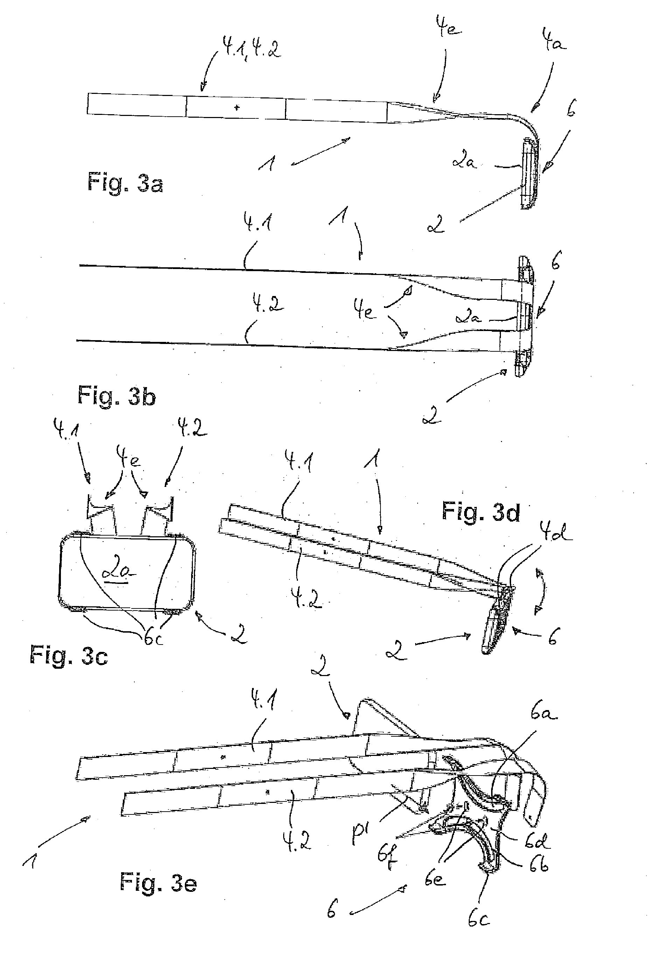

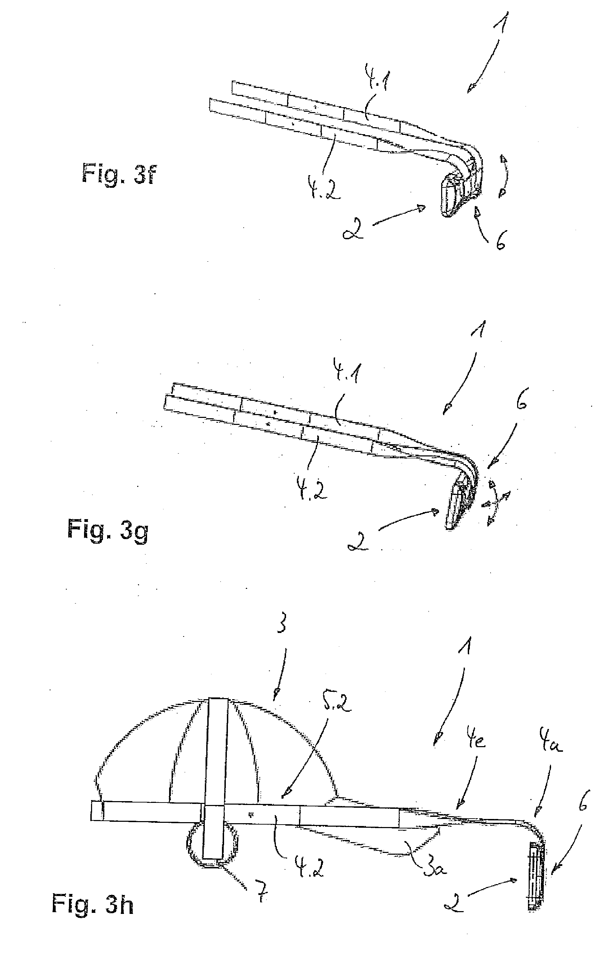

Die Ausgestaltung gemäß Figur 3 (umfassend Figuren 3a bis 3h) gehört nicht zur vorliengenden Erfindung. Sie entspricht größtenteils der vorstehend beschriebenen Ausgestaltung gemäß Figur 2. Allerdings ist vorliegend auf einige Besonderheiten hinzuweisen:

Wie aus Figur 3, beispielsweise Teilfiguren 3a und 3b, ersichtlich ist, sind die Haltearme 4.1, 4.2 nicht nur bei Bezugszeichen 4a um 90° nach unten abgebogen, sondern weiter in Richtung zum Benutzer (jeweils links in den Teilfiguren der Figur 3) bei Bezugszeichen 4e um 90° in sich verwunden. Hiervon abgesehen entspricht die Ausgestaltung gemäß Figur 3 im Wesentlichen derjenigen in Figur 2, mit der weiteren wesentlichen Ausnahme, dass an den Haltearmen 4.1, 4.2 selbst keine Befestigungsmittel vorgesehen sind. Wie ein Blick auf Figur 3h zeigt, sind die Befestigungsmittel bei der vorliegenden Ausgestaltung der Haltevorrichtung 1 Teil der Kopfbedeckung 3, welche somit selbst Bestandteil der Haltevorrichtung 1 ist, wie bereits erwähnt. Gemäß der Darstellung in Figur 3h sind die Befestigungsmittel, von denen aufgrund der gewählten Darstellung nur eines 5.2 explizit dargestellt ist, als jeweils seitlich im Schläfenbereich an der Kopfbedeckung 3 angeordnete(r) Tasche oder Tunnel ausgebildet, in welche(n) die Haltearme 4.1, 4.2 (lösbar) eingesteckt oder eingenäht sind. Somit sind die Haltearme 4.1, 4.2 bei der vorliegenden Ausgestaltung der Haltevorrichtung 1 seitlich an bzw. in der Kopfbedeckung 3 gehalten, welche die Befestigungsmittel bereitstellt. Die weitere Ausgestaltung der Haltevorrichtung 1 entspricht ansonsten derjenigen in Figur 1 bzw. Figur 2, insbesondere was die Aufnahme- und Haltemittel 6 und die Verstellmöglichkeiten der Haltearme 4.1, 4.2 anbelangt.

Bei der Ausgestaltung gemäß Figur 3 sind die Haltearme 4.1, 4.2 vorzugsweise in einen zumindest teilweise flexiblen Material ausgebildet, damit im Seitenbereich der Kopfbedeckung 3 ein zumindest teilweises Anpassen an die Kopfform des Benutzers (des Mützenträgers) möglich ist.

Die Ausgestaltung gemäß Figur 4 (umfassend Teilfiguren 4a bis 4h) entspricht weitestgehend derjenigen in Figur 3 und gehört eberfalls nicht zur vorliegenden Erfindung. Der einzige wesentliche Unterschied besteht darin, dass die Kopfbedeckung 3 vorliegend nicht als Schirmmütze oder dergleichen sondern als Stirnband ohne Sonnenschild ausgebildet ist. Bezugszeichen 3' bezeichnet (idealisiert) den oberen Kopfbereich des Benutzers.

Um die Haltearme 4.1, 4.2 an der Kopfbedeckung 3, das heißt dem Stirnband zu befestigen, weist letzteres wiederum mindestens eine Tasche oder einen Tunnel 5.2 auf, in welchen die Haltearme 4.1, 4.2 eingesteckt oder eingenäht sind, um diese seitlich am Kopf des Benutzers zu halten.

Figur 5 (umfassend Teilfiguren 5a bis 5e) zeigt eine besonders einfache Ausgestaltung der erfindungsgemäßen Haltevorrichtung 1, bei welcher die Haltearme 4.1, 4.2 aus einem vorzugsweise metallischen Rohr- oder Drahtmaterial geformt sind. Die Haltearme 4.1, 4.2 können dabei einstückig aus einem einzigen Drahtelement gebildet sein.

Nachfolgend sei auf einige Besonderheiten der Ausgestaltung gemäß Figur 5, welche ebenfalls nicht zur vorliengenden Erfindung gehört, näher eingegangen:

Wie insbesondere der Seitenansicht in (Teil-)Figur 5a zu entnehmen ist, weisen die Haltearme 4.1, 4.2 ausgehend von ihrem den Aufnahme- und Haltemitteln 6 abgewandten Ende zunächst einen geradlinigen Verlauf auf. Anschließend erfolgt bei Bezugszeichen 4f zunächst eine Abbiegung um etwa 45° nach unten und danach bei Bezugszeichen 4g eine Abbiegung um erneut etwa 45° nach oben, so dass der Verlauf der Haltearme 4.1, 4.2 anschließend wieder parallel zu dem ursprünglichen geradlinigen Verlauf ist. Weiterhin sind die Haltearme 4.1, 4.2 nach Art eines Bügels einstückig oder bei Bezugszeichen 4i zusammensteckbar ausgebildet und vereinigen sich im Bereich der Aufnahme- und Haltemittel 6, so dass sich insgesamt ein in der Draufsicht (vgl. Figur 5b) U-förmiger, bügelartiger Verlauf ergibt.

Im Bereich des mittleren U-Schenkels 4h sind die Aufnahme- und Haltemittel 6 angebracht, was z. B. in einfacher Weise dadurch geschehen kann, dass die Haltearme 4.1, 4.2 jeweils seitlich in eine entsprechende Ausnehmung der Aufnahme- und Haltemittel 6 eingesteckt sind, wie dies in Figur 5d angedeutet ist. Aufgrund des vorzugsweise kreisförmigen Querschnitts der Haltearme 4.1, 4.2 ist auf diese Weise auch leicht eine Verschwenkbarkeit der Aufnahme- und Haltemittel 6 in Richtung des Doppelpfeils in Figur 5d realisierbar.

Die Befestigungsmittel zum Verbinden der Haltearme 4.1, 4.2 mit der Kopfbedeckung 3 gemäß Figur 5e sind wiederum als Teil der Kopfbedeckung 3 ausgebildet, welche somit Bestandteil der Haltevorrichtung ist. Vorzugsweise ist in diesem Zusammenhang wiederum wenigstens ein seitlicher Tunnel oder eine seitliche Tasche 5.2 im Schläfenbereich der Kopfbedeckung 3 vorgesehen. Im Zuge einer möglichst einfachen Ausgestaltung in der Haltevorrichtung 1 können in dem genannten Bereich auch einfach eine Reihe von Schlaufen oder Ösen vorgesehen sein, in welche die Haltearme 4.1, 4.2 jeweils eingesteckt sind. Eine Klettverbindung in diesem Bereich ist ebenfalls möglich.

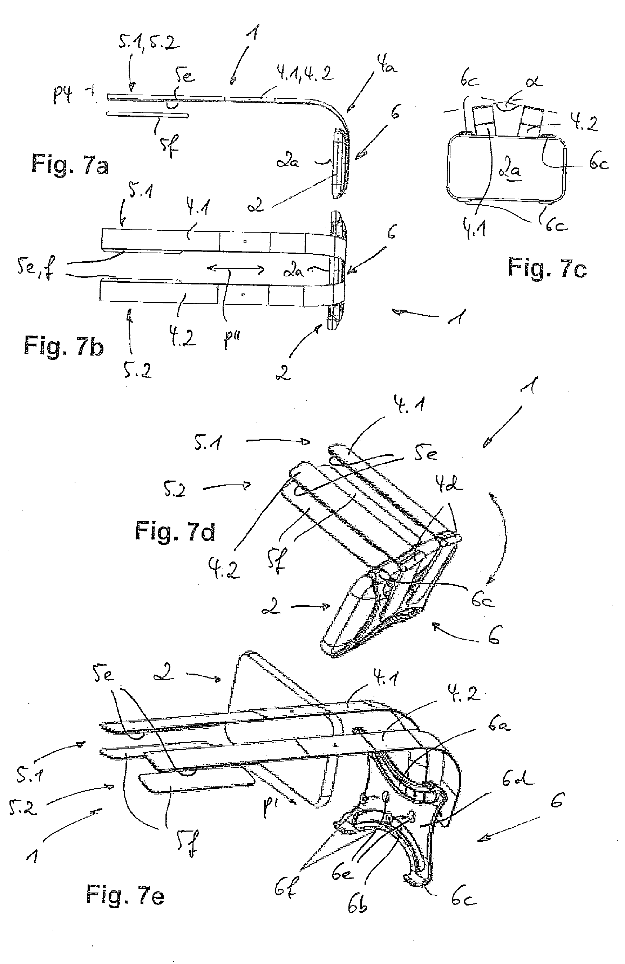

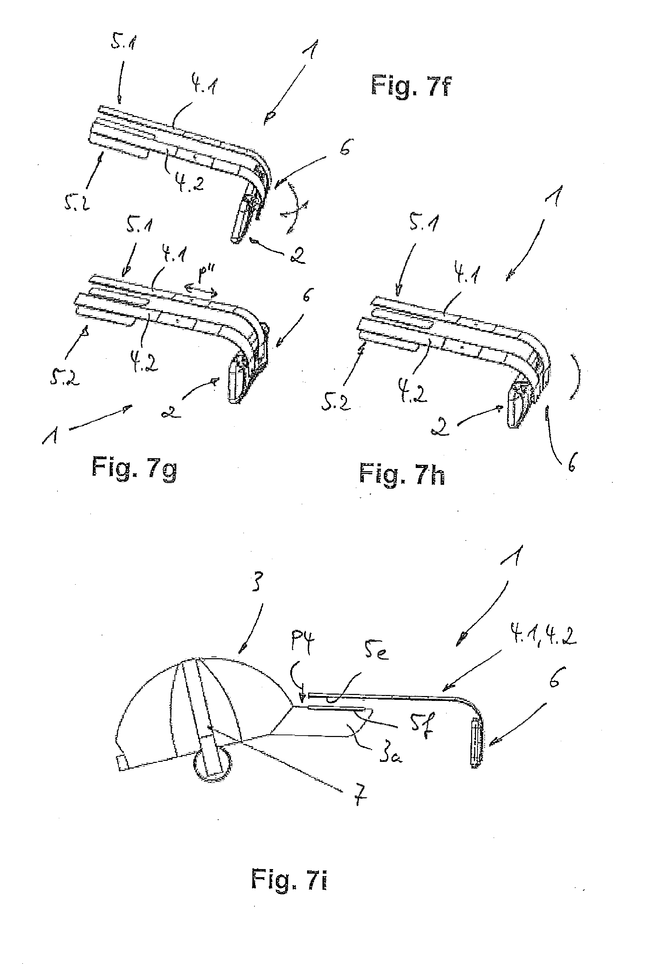

Wie in den Figuren 5a und 5b mittels einer Trennlinie T angedeutet, kann die Haltevorrichtung 1 im Bereich der Haltearme 4.1, 4.2 verkürzt ausgebildet sein. Eine derartige Ausgestaltung eignet sich zur Befestigung direkt am Mützenschirm 3a, insbesondere durch Annähen, Einnähen, Annieten, Verkleben oder auch mittels einer Klettverbindung. Auf letztere Befestigungsvariante wird weiter unten anhand von Figur 7 noch genauer eingegangen. Die Figur 8 zeigt ebenfalls eine verkürzte Variante der Haltevorrichtung 1, welche grundsätzlich der vorstehend angesprochenen Variante bei Trennung entlang der Trennlinie T entspricht.

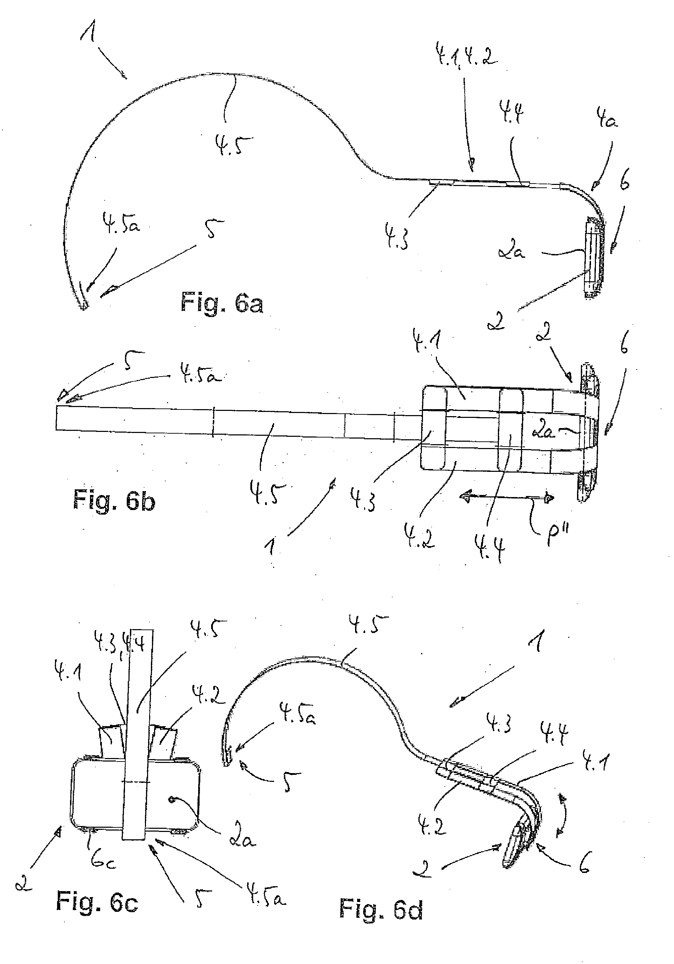

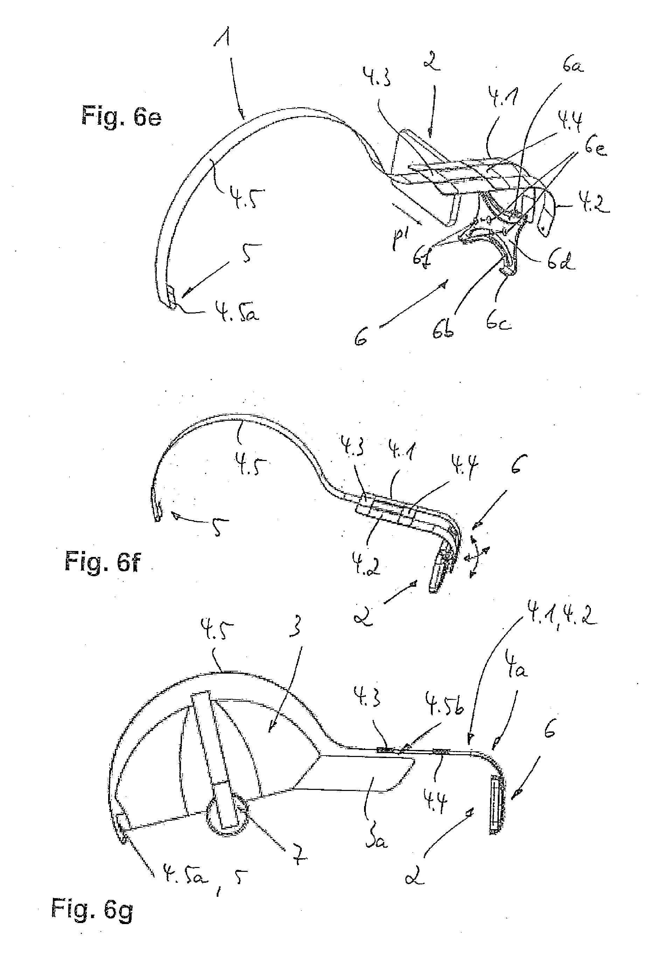

Die Figur 6 (umfassend Teilfiguren 6a bis 6g) zeigt eine besondere Ausgestaltung der erfindungsgemäßen Haltevorrichtung 1, welche zur "Überkopfmontage" vorgesehen ist.

Nachfolgend wird auf die Besonderheiten dieser Ausgestaltung näher eingegangen, welche im Bereich der Aufnahme- und Haltemittel 6 sowie deren Anbindung an die Haltearme 4.1, 4.2 im Wesentlichen in der Ausgestaltung gemäß Figur 2 entspricht.

Anders als in Figur 2 weisen jedoch die Haltearme 4.1, 4.2, welche in Richtung hin zum Kopf des Benutzers verkürzt ausgebildet sind, nicht jeweils selbst Befestigungsmittel 5.1, 5.2 auf, sondern sind untereinander mittels Querverbindungsteilen 4.3, 4.4 verbunden, wobei die Querverbindungsteile 4.3, 4.4 im Bereich zwischen den Haltearmen 4.1, 4.2 jeweils einen Durchbruch aufweisen, in den ein weiterer Haltearm 4.5 mittig in den Bereich zwischen den Haltearme 4.1, 4.2 einschiebbar und dort einstellbar gehalten ist. Der weitere Haltearm 4.5 weist an seinem einen Ende, mit dem er in die genannten Querverbindungsteile 4.3, 4.4 eingeschoben ist, einen im Wesentlichen geradlinigen, flachen Verlauf auf. Zu seinem anderen, freien Ende hin ist er in etwa halbkreisförmig gebogen und endet an seinem freien Ende mit einer hakenartigen 180°-Umbiegung 4.5a.

Die Verwendung der Haltevorrichtung gemäß Figur 6 ist nun folgende:

Mit der Umbiegung 4.5a wird der Haltearm 4.5 im Hinterkopfbereich an der Kopfbedeckung 3 (vgl. Figur 6h) befestigt bzw. eingehängt, welche zu diesem Zweck in dem genannten Bereich eine geeignete Befestigungsstruktur aufweist, welche vorzugsweise durch das Verstellband einer herkömmlichen Schirmmütze oder dergleichen gebildet ist. Natürlich kann auch bei einer beliebigen Art von Kopfbedeckung in diesem Bereich eine dezidierte Befestigungsstruktur vorgesehen sein, z. B. in Form eines Rings, einer Öse oder einer Lasche, in welche der Haltearm 4.5 mit der Umbiegung 4.5a einhängbar ist.

Anschließend wird der Haltearm 4.5 mit seinem gekrümmten Bereich über den Kopf bzw. die Kopfbedeckung 3 des Benutzers geführt, und liegt dann vorzugsweise im Bereich der Querverbindungsteile 4.3, 4.4 bzw. der parallelen Haltearme 4.1, 4.2 bei Bezugszeichen 4.5b auf der Kopfbedeckung 3 auf, beispielsweise auf dem Schirm 3a einer Schirmmütze.

Wie der Fachmann erkennt, ist es grundsätzlich jedoch auch möglich, anstelle der Haltearme 4.1, 4.2 und der Querverbindungselemente 4.3, 4.4 einen nach vorne verlängerten einzigen Haltearm 4.5 vorzusehen, welcher ansonsten in seinem vorderen Bereich im Wesentlichen gemäß der Ausgestaltung in Figur 1 ausgebildet sein kann.

Weiterhin kann natürlich auch beim Gegenstand der Figur 6 eine Ausgestaltung des Haltearms 4.5 bzw. der Haltearme 4.1, 4.2 mit Gelenk(en) 4d gemäß den Figuren 1d bis 4d zum Einsatz kommen.

Auch ansonsten steht es dem Fachmann frei, einzelne Merkmale der vorstehend beschriebenen Ausgestaltungen gemäß den Figuren 1 bis 8 ohne eigenes erfinderisches Zutun zu kombinieren.

Figur 7 (umfassend Teilfiguren 7a bis 7i) zeigt eine weitere Ausgestaltung der erfindungsgemäßen Haltevorrichtung 1, welche weitestgehend der in Figur 2 dargestellten Ausgestaltung entspricht, so dass hier nur auf einige Besonderheiten näher einzugehen ist.

Diese betreffen die Befestigungsmittel 5.1, 5.2 zum Befestigen der Haltevorrichtung 1 bzw. der Haltearme 4.1, 4.2 an der in Figur 7i beispielhaft gezeigten Kopfbedeckung 3 mit Mützenschirm 3a.

Bei der Ausgestaltung gemäß Figur 7 sind die Befestigungsmittel 5.1, 5.2 in Form von Klettverbindungen ausgebildet. Diese umfassen jeweils ein Hakenelement 5e, welches mit einem Flauschelement 5f zusammenwirkt. Vorzugsweise sind die Hakenelemente 5e jeweils an der Unterseite der Haltearme 4.1, 4.2 angeordnet, während sich die Flauschelemente 5f auf der Oberseite des Mützenschirms 3a befinden (vgl. Figur 7i). Allerdings ist auch die umgekehrte Anbringung möglich. Des Weiteren könnten sich die Haken- bzw. Flauschelemente auch an der Unterseite des Mützenschirms befinden. Statt zweier getrennter Haken- bzw. Flauschelemente kann an dem Mützenschirm auch ein einziges, durchgehendes Element zum Einsatz kommen.

Selbstverständlich eignet sich eine derartige Verbindung zwischen Haltevorrichtung 1 und Kopfbedeckung 3 grundsätzlich auch zur Verwendung bei den anderen gezeigten Ausgestaltungen der vorliegenden Erfindung, insbesondere zur seitlichen Anbringung der Haltearme gemäß Figur 5 oder anstelle bzw. zusätzlich zum Einhaken im Hinterkopfbereich bei der Ausgestaltung gemäß Figur 6. Dort kann sich das Haken- oder Flauschelement mittig über die gesamte Kopfbedeckung 3 erstrecken.

Zur bestimmungsgemäßen Verwendung der Haltevorrichtung gemäß Figur 7 wird diese mit ihren Haltearmen 4.1, 4.2 einfach in Richtung des in Figur 7a und Figur 7i dargestellten Pfeils P4 mittels der beschriebenen Klettverbindung mit der Kopfbedeckung 3 verbunden, das heißt Hakenelemente 5e und Flauschelemente 5f werden in Kontakt gebracht.

Schließlich zeigt die Figur 8 (umfassend Teilfiguren 8a bis 8f) eine Ausgestaltung der vorliegenden Erfindung, welche derjenigen entlehnt ist, die weiter oben bereits anhand von Figur 5 ausführlich beschrieben wurde. In diesem Zusammenhang wurde bereits angesprochen, dass die Ausgestaltung gemäß Figur 5 durch Trennen an der Trennlinie T verkürzt ausgebildet sein kann und sich in diesem Zusammenhang insbesondere für eine Befestigung an einem Mützenschirm oder einem Sonnenschild eignet. Dies ist in Figur 8 detailliert dargestellt.

Gemäß den Figuren 8a bis 8c sind die Haltearme 4.1, 4.2 aus dem gleichen Material hergestellt, wie bei der Ausgestaltung gemäß Figur 5, verlaufen jedoch ansonsten in etwa wie bei der Ausgestaltung gemäß Figur 2. Mit anderen Worten: Die Haltearme 4.1, 4.2 verlaufen nach der Abbiegung bei Bezugszeichen 4a nach unten und innen hin zu einem gemeinsamen Punkt, bei dem sie mit den Aufnahme- und Haltemitteln 6 verbunden sind. Auch hier können die Haltearme 4.1, 4.2 einstückig ausgebildet sein. Bei dem gemeinsamen Punkt kann eine (nicht explizit dargestellte) Verdickung oder auch eine U-förmige Abbiegung vorgesehen sein, die zum Aufnehmen eines Schraubmittels für die Befestigung der Aufnahme- und Haltemittel 6 dient.

Die Aufnahme- und Haltemittel 6 sind gemäß der Darstellung in Figur 8e durch ein X- oder kreuzförmiges Teil gebildet, welches an seinen freien Balkenenden wiederum die bereits mehrfach erwähnten leicht einwärts gekrümmten Haltevorsprünge 6c aufweist. Der zentrale Durchbruch 6e dient zum (lösbaren) Verbinden mit den Enden der Haltearme 4.1, 4.2, vorzugsweise mittels einer Schraubverbindung.

Das Aufnahme- und Halteteil gemäß Figur 6 in Figur 8e kann insbesondere als Leichtmetall-Stanzteil ausgebildet sein, vorzugsweise in Aluminium.

Figur 8f zeigt die Anbringung der vorstehend beschriebenen Haltevorrichtung 1 im Bereich des Mützenschirms 3a bei einer ansonsten handelsüblichen Schirmmütze 3. Die Befestigung kann durch Nähen, Nieten, Schrauben, Kleben, Einstecken oder mittels einer Klettverbindung erfolgen.

Es sei an dieser Stelle abschließend noch einmal darauf hingewiesen, dass die in den Figuren 1 bis 8, insbesondere den Figuren 1h bis 4h, 5e, 6g, 7i und 8f beispielhaft gezeigte Kopfbedeckung 3 nicht zwangsläufig Teil einer erfindungsgemäßen Haltevorrichtung sein muss. Letztere ist auch ohne Kopfbedeckung 3 selbständig handelbar. Allerdings ist es zweckmäßig, eine Kopfbedeckung als Teil der erfindungsgemäßen Haltevorrichtung vorzusehen, wenn die Kopfbedeckung zum Zusammenwirken mit der restlichen Haltevorrichtung in bestimmter Weise konstruktiv angepasst sein muss, wie dies beispielsweise gemäß den Figuren 3h bis 5h der Fall ist.

Das Soundsystem 7 ist - wie bereits angemerkt - lediglich optionaler Bestandteil der vorliegenden Erfindung. Insbesondere bei den Ausgestaltungen gemäß Figur 3 und Figur 4 kann das optionale Soundsystem 7 an den seitlich des Kopfes verlaufenden Haltearmen 4.1, 4.2 festgelegt sein.

Die Haltevorrichtung 1 und hier insbesondere der Haltearm 4 bzw. die Haltearme 4.1, 4.2, 4.5 mit ihren Einzelteilen sowie die Aufnahme- und Haltemittel 6 können zu Lagerungs-, Transport- und Verpackungszwecken als separate Einzelteile vorliegen, welche vorteilhafterweise erst durch den Endbenutzer zu der fertigen Haltevorrichtung zusammengefügt werden.

Aus Stabilitätsgründen können die Haltearme 4.1, 4.2 bei den gezeigten zweiarmigen Varianten auch überkreuz verlaufen.

## Patentansprüche

1. Haltevorrichtung (1) für ein mobiles Multimedia-Endgerät (2), wie Pocket-PC, Smartphone oder dergleichen, aufweisend:
- wenigstens einen Haltearm (4, 4.1, 4.2, 4.5);
- an einem ersten Ende des Haltearms angeordnete Befestigungsmittel (5), die zum Befestigen des Haltearms an einer Kopfbedeckung (3), vorzugsweise einer handelsüblichen Schirmmütze oder einem handelsüblichen Stirnband mit Sonnenschutz-Schild (3a), ausgebildet sind, so dass sich der Haltearm von der Kopfbedeckung aus in Blickrichtung eines Benutzers nach vorne erstreckt;
- an dem anderen, zweiten Ende des Haltearms angeordnete Aufnahme- und Haltemittel (6) für das Multimedia-Endgerät;
bei der die Aufnahme- und Haltemittel für das Multimedia-Endgerät derart relativ zu dem Haltearm angeordnet oder einstellbar sind, dass sich zumindest die graphische Anzeigeeinrichtung (2a) eines darin aufgenommenen Multimedia-Endgeräts nach Befestigung des Haltearms an der Kopfbedeckung im Wesentlichen mittig im Gesichtsfeld eines Benutzers befindet,
**dadurch gekennzeichnet, dass**
die Befestigungsmittel (5) eine bezüglich der Erstreckung des Haltearms (4.5) umgebogene Struktur (4.5a) umfassen, welche zum Einhängen in eine geeignete Struktur, vorzugsweise ein Verstellband oder dergleichen, im Hinterkopfbereich einer Kopfbedeckung (3) ausgebildet ist, um den Haltearm an der Kopfbedeckung zu befestigen, wobei der Haltearm zwischen den Befestigungsmitteln und seinem zweiten Ende zumindest einen zu der Kopfbedeckung komplementär geformten Abschnitt aufweist, und wobei die Haltevorrichtung höchst vorzugsweise zusätzlich eine entsprechende ausgebildete Kopfbedeckung mit umfasst, oder
die Befestigungsmittel (5) wenigstens einen Durchbruch (5c, 5d) in dem Haltearm (4, 4.1, 4.2, 4.5) sowie durch den Durchbruch hindurchführbare Verbindungsmittel, vorzugsweise Schraubmittel, umfassen, die mit wenigstens einer komplementären Struktur, vorzugsweise einem entsprechenden Durchbruch, im Schirm-, Schild- oder Krempenbereich (3a) einer ansonsten vorzugsweise handelsüblichen Kopfbedeckung (3) zusammenwirken, um den Haltearm an der Kopfbedeckung zu befestigen, wobei die Haltevorrichtung höchst vorzugsweise zusätzlich eine entsprechende ausgebildete Kopfbedeckung mit umfasst, oder
die Befestigungsmittel (5) als Klemmmittel mit wenigstens zwei federelastisch gegeneinander wirkenden Klemmteilen (5a, 5b) ausgebildet sind, mit welchen der Haltearm (4, 4.1, 4.2, 4.5) im Klemmsitz an einem Schild, einem Schirm, einer Krempe oder dergleichen (3a) einer vorzugsweise handelsüblichen Kopfbedeckung (3) befestigbar ist.

2. Haltevorrichtung (1) nach Anspruch 1, **dadurch gekennzeichnet, dass** der Haltearm (4, 4.1, 4.2, 4.5), vorzugsweise einstellbar, derart ausgebildet ist, dass sich die Aufnahme- und Haltemittel (6) für das Multimedia-Endgerät (2) in einem Abstand zwischen 10 cm und 40 cm, vorzugsweise zwischen 15 cm und 30 cm, vom Auge des Benutzers befindet, wobei die Haltevorrichtung vorzugsweise zwei parallel angeordnete, im Wesentlichen identische Haltearme (4.1, 4.2) aufweist, an deren zweiten Enden die Aufnahme- und Haltemittel (6) für das Multimedia-Endgerät (2) angeordnet sind.

3. Haltevorrichtung (1) nach Anspruch 1 oder 2, **dadurch gekennzeichnet, dass** die Aufnahme- und Haltemittel (6) für das Multimedia-Endgerät (2) gelenkig an dem Haltearm (4, 4.1, 4.2, 4.5) befestigt sind, vorzugsweise mittels eines Schwenk- oder Kugelgelenks.

4. Haltevorrichtung (1) nach mindestens einem der Ansprüche 1 bis 3,
**dadurch gekennzeichnet, dass** die Aufnahme- und Haltemittel (6) für das Multimedia-Endgerät (2) als Halteschale ausgebildet sind, in welche das Multimedia-Endgerät einschiebbar oder einklipsbar ist.

5. Haltevorrichtung (1) nach mindestens einem der Ansprüche 1 bis 4,
**dadurch gekennzeichnet, dass** die Aufnahme- und Haltemittel (6) für das Multimedia-Endgerät (2) auf unterschiedlich dimensionierte Multimedia-Endgeräte einstellbar sind.

6. Haltevorrichtung (1) nach mindestens einem der Ansprüche 1 bis 5,
**dadurch gekennzeichnet, dass** die Aufnahme- und Haltemittel (6) für das Multimedia-Endgerät (2) lösbar an dem Haltearm befestigt sind, vorzugsweise angeschraubt.

7. Haltevorrichtung (1) nach mindestens einem der Ansprüche 1 bis 6,
**dadurch gekennzeichnet, dass** der Haltearm (4, 4.1, 4.2, 4.5) zumindest in seinem den Aufnahme- und Haltemitteln (6) für das Multimedia-Endgerät (2) zugewandten Abschnitt im Wesentlichen starr ausgebildet ist, wobei der Haltearm in diesem Abschnitt vorzugsweise wenigstens ein Gelenk (4d) aufweist, so dass die Aufnahme- und Haltemittel für das Multimedia-Endgerät aus dem Gesichtsfeld des Benutzers heraus bewegbar sind.

8. Haltevorrichtung (1) nach mindestens einem der Ansprüche 1 bis 7,
**dadurch gekennzeichnet, dass** der Haltearm (4, 4.1, 4.2, 4.5) zumindest in seinem den Aufnahme- und Haltemitteln (6) für das Multimedia-Endgerät (2) abgewandten Abschnitt flexibel, vorzugsweise biegsam-halbsteif nach Art eines Schwanenhalses, ausgebildet ist.

9. Haltevorrichtung (1) nach mindestens einem der Ansprüche 1 bis 8,
**dadurch gekennzeichnet, dass** der Haltearm (4, 4.1, 4.2, 4.5) im Bereich seines zweiten Endes eine Abwinkelung oder Abbiegung (4a, 4e, 4f, 4g) aufweist, um die Aufnahme- und Haltemittel (6) für das Multimedia-Endgerät (2) im Gesichtsfeld des Benutzers zu positionieren, wobei das Maß der Abwinkelung oder Abbiegung vorzugsweise zwischen 70° und 110° und höchst vorzugsweise etwa 90° beträgt.

10. Haltevorrichtung (1) nach mindestens einem der Ansprüche 1 bis 9,
**dadurch gekennzeichnet, dass** der Haltearm (4, 4.1, 4.2, 4.5) zumindest abschnittweise im Wesentlichen flach und vorzugsweise in Kunststoff ausgebildet ist, und/oder dass der Haltearm zumindest abschnittweise einen runden Querschnitt aufweist und vorzugsweise in Metall, höchst vorzugsweise als Metalldraht, ausgebildet ist.

11. Haltevorrichtung (1) nach mindestens einem der Ansprüche 1 bis 10, **gekennzeichnet durch** eine Lautsprechereinrichtung (7), vorzugsweise nach Art eines Kopfhörers, zur Befestigung an dem Haltearm (4.1, 4.2) oder an der Kopfbedeckung (3), wobei die Lautsprechereinrichtung mit dem mobilen Multimedia-Endgerät (2) signaltechnisch zusammenwirkt.
